# EUROPÄISCHE PATENTSCHRIFT

(11) **EP 0 885 082 B1**
(45) Veröffentlichungstag und Bekanntmachung des Hinweises auf die Patenterteilung: **30.05.2001**
(21) Anmeldenummer: 97905154.7
(22) Anmeldetag: 04.03.1997
(51) Int. Cl.: B23C 3/06

(54) **VERFAHREN UND VORRICHTUNG ZUM BEARBEITEN DER LAGERSITZE VON KURBELWELLEN**
METHOD AND DEVICE FOR MACHINING CRANKSHAFT BEARING SEATS
PROCEDE ET DISPOSITIF POUR USINER DES LOGEMENTS DE PALIER DE VILEBREQUINS

(30) Priorität: 09.03.1996 DE 19609239
(43) Veröffentlichungstag der Anmeldung: 23.12.1998
(73) Patentinhaber: Ingersoll Naxos GmbH, 63225 Langen (DE)
(72) Erfinder: LEHMANN, Dieter, D-63303 Dreieich (DE); LEHMANN, Thomas, D-83607 Holzkirchen (DE)
(74) Vertreter: KEIL & SCHAAFHAUSEN
(86) Internationale Anmeldenummer: EP9701089
(87) Internationale Veröffentlichungsnummer: WO9732680

(56) Entgegenhaltungen:
- DE-A- 2 352 539
- DE-A- 19 502 476
- DE-C- 212 950
- GB-A- 191 103 643
- US-A- 1 373 690

## Beschreibung

Die Erfindung betrifft ein Verfahren nach dem Oberbegriff des Anspruchs 1 sowie eine Vorrichtung zur Durchführung eines solchen Verfahrens gemäß Patentanspruch 9.

Die Bearbeitung der Kurbelwellenlaufsitze für die Pleuellager und die Hauptlager erfolgt herkömmlicherweise in mehreren Schritten. Zunächst wird die geschmiedete oder gegossene Kurbelwelle durch Drehen, Fräsen oder Drehräumen vorbearbeitet, dann durch Schleifen zwischenbearbeitet und schließlich einer Finish-Bearbeitung unterworfen, mit welcher die geforderten hochgenauen Endtoleranzen erreicht werden. Dieses dreistufige Verfahren ist jedoch relativ aufwendig und erhöht durch die Umrüstzeiten insbesondere bei den im Automobilbau üblichen hohen Stückzahlen die Herstellungskosten beträchtlich. Ferner entsteht für die Entsorgung der Abfallprodukte der Schneidbearbeitung ein beträchtlicher Aufwand.

In jüngerer Zeit gewinnt eine neue Bearbeitungstechnologie an Bedeutung, die sogenannte "Hochgeschwindigkeitsbearbeitung" (High Speed Cutting), insbesondere das Drehfräsen. Durch sehr hohe Schnittgeschwindigkeiten kann eine hervorragende Oberflächengüte erzielt werden, die an die beim Fertigschleifen erreichbaren Qualitäten heranreicht. Die hohe Schnittgeschwindigkeit ermöglicht engere Zeilenabstände von Fräsbahn zu Fräsbahn und damit bei nur geringen auf das Werkstück einwirkenden Kräften ohne Zeitverlust eine wesentlich größere Annäherung an die Sollkontur. Das Drehfräsen, bei dem das Fräswerkzeug durch entsprechend hohe Drehzahlen die hohen Schnittgeschwindigkeiten erreicht, wurde bisher als Ersatz für das Längsdrehen eingesetzt, wobei ein orthogonal zur Werkstückachse angeordnetes rotierendes Drehfräswerkzeug entlang der Werkzeuglängsachse zugestellt wird. Bei den relativ schmalen Lagersitzen von Kurbelwellen ist ein solcher Axialvorschub jedoch nicht sinnvoll.

Die DE-AS 12 36 303 beschreibt eine Vorrichtung zum Herstellen von Rotationsflächen an Kurbelwellen mittels eines Fräsers, dessen Vorschub sowohl durch eine Relativbewegung zwischen Werkzeug und Werkstück entlang der Rotationsfläche als auch durch eine Bewegung des Werkzeuges rechtwinklig zu seiner Achse erzielbar ist. Die vorbekannte Vorrichtung ist zum Bearbeiten von großen Kurbelwellen vorgesehen, die bei größeren Dieselmotoren ein Gewicht bis zu 100 t und mehr aufweisen können. Die einzelne zu bearbeitende Lagerstelle kann dabei einen Durchmesser von bis zu 700 mm oder mehr aufweisen. Bei der Bearbeitung wird entweder dem Werkzeug und dem Werkstück eine langsame Drehbewegung um die Achse des Werkstücks erteilt oder, wie bei der Bearbeitung von Kurbelzapfen, nur das Werkzeug um den feststehenden Zapfen gedreht. Bei beiden Gestaltungen dreht sich das Werkzeug somit um die Mittelachse des zu bearbeitenden Lagerzapfens. Hierbei werden zunächst zwei zylindrische Flächen unmittelbar neben den beiden Schenkeln der Wellenkröpfung bearbeitet. Danach wird das Werkzeug parallel zu sich selbst verschoben, um zwei weitere zylindrische Teile innerhalb der bereits bearbeiteten Zylinderflächen zu bearbeiten. Durch eine noch weitere Parallelverschiebung des Werkzeuges erhält man eine vollbearbeitete Zylinderfläche. Diese Bearbeitungsweise ist auf die Bearbeitung großer und schwerer Kurbelwellen, beispielsweise für Schiffsmotoren, abgestimmt, die in geringen Stückzahlen, ggf. sogar als Einzelstücke, angefertigt werden. Die Bearbeitungszeit ist hierbei für die Herstellungskosten von sekundärer Bedeutung. Ein Einsetzen einer derartigen Vorrichtung im Automobilbau ist dagegen aufgrund der dort vorgesehenen hohen Stückzahlen nicht möglich, da der mit dem vorbekannten Verfahren verbundene Zeitaufwand die Kosten für die Automobil-Kurbelwellen in unvorstellbare Höhen treiben würde. Auch werden Automobil-Kurbelwellen zur Erhöhung der Bearbeitungsgenauigkeit und -geschwindigkeit mit Drehzahlen von bis zu 100 Umdrehungen pro Minute gedreht, bei denen eine Drehung des Fräswerkzeugs um den zu bearbeitenden Lagerzapfen nicht mehr oder nur mit unverhältnismäßigem Aufwand durchführbar wäre. Dies läßt sich vielmehr nur bei sehr langsam drehenden oder gar stillstehenden Kurbelwellen für Schiffsmotoren oder dergleichen durchführen. Es kommt hinzu, daß die unterschiedlichen Arbeitsstellungen die Bearbeitungsgenauigkeit negativ beeinflussen. So reichen die bei der vorbekannten Vorrichtung erzielbaren Genauigkeiten von einigen 100 Teilen eines Millimeters für die heutzutage im Automobilbau geforderten Toleranzen bei weitem nicht aus. Es wäre daher noch eine Nachbearbeitung durch Schleifen erforderlich.

Die DE-OS 16 27 117 und die AT-PS 286 067 beschreiben ebenfalls das Bearbeiten äußerst großer Kurbelwellen, wobei beim Fertigfräsen die Oberfläche des Hubzapfens bis auf einen Zusatz für das Schleifen abgearbeitet wird. Bei der Bearbeitung folgt der Walzenstirnfräser dem auf einer Kreisbahn umlaufenden Hubzapfen, wobei die Bewegungen des Hubzapfens und des Fräsers synchronisiert sind. Hierbei wird zur Schruppbearbeitung des Hubzapfens der Walzenstirnfräser zunächst exzentrisch zur Achse des Hubzapfens angeordnet, damit die Umfangsteile der Schneidkanten des Walzenstirnfräsers die günstigsten Schneidbedingungen haben. Beim anschließenden Arbeitsschritt des Fertigfräsens wird die Drehachse des Walzenstirnfräsers so verschoben, daß sie etwa die Drehachse des Hubzapfens schneidet. Abgesehen davon, daß bei einer für langsamdrehende, schwere Kurbelwellen vorgesehenen Vorrichtung völlig andere Schwerpunkte gesetzt werden als bei der Bearbeitung von schnelldrehenden Automobil-Kurbelwellen, ist die erzielbare Genauigkeit nicht ausreichend, so daß immer noch eine zusätzliche Schleifbearbeitung erforderlich ist. Hierdurch werden jedoch die Herstellungskosten der Kurbelwellen erheblich erhöht.

Auch aus der DE-Zt.: VDI-Z Bd. 126 (1984) Nr. 15/16 - August (I/II) S. 562 bis 565 ist das Drehfräsen großer Werkstücke bekannt, wobei das Fräswerkzeug mit Wendeplatten bestückt wird. Die Bearbeitung erfolgt jedoch nur bei äußerst geringen Werkstückdrehzahlen, wobei das Drehfräswerkzeug in Längsrichtung (X-Achse) des zu bearbeitenden Werkstück entlanggeführt wird.

Aus der DE-C 212 950 ist ein Verfahren zum Bearbeiten der Lagersitze von Kurbelwellen mittels eines ringförmigen Stirnfräsers oder ein Schleifzylinders bekannt, bei dem das Werkzeug quer zur Längsachse des Werkstücks an der zu bearbeitenden Lagerstelle vorbeigeführt wird, so daß mit einem der Länge des zu bearbeitenden Werkstücks entsprechend großen Werkzeug bei einmaligem Durchgang desselben eine glatte Fläche erzielt wird. Zum Erreichen der bei Automobil-Kurbelwellen oder dgl. erforderlichen Oberflächengüten ist es aber auch hierbei erforderlich, daß sich an die Fräsbearbeitung noch eine Schleif-Feinbearbeitung anschließt.

Aufgabe der Erfindung ist es, die Bearbeitung der Lagersitze von Automobil-Kurbelwellen oder dergleichen Werkstücken effektiver zu gestalten und dadurch die Herstellkosten zu senken.

Diese Aufgabe wird mit der Erfindung durch die Merkmale des Anspruchs 1 gelöst. Durch entsprechend hohe Drehzahlen des Drehfräswerkzeugs können die beim High-Speed-Cutting erforderlichen hohen Schnittgeschwindigkeiten erreicht werden, und die Kurbelwelle trotzdem mit der üblichen Drehzahl von bis zu ca. 100 min⁻¹ gedreht werden, die auch beim Schleifen zur Erzielung der hohen Qualitäten des Werkstücks zum Einsatz kommt. Durch die hohen Schnittgeschwindigkeiten ist die Werkstückbeanspruchung klein und es läßt sich eine sehr gute Raumgeometrie erreichen. Bei auf die Kontur des Lagersitzes abgestimmtem Werkzeug ermöglicht die tangentiale Zuführung des Drehfräswerkzeugs die Bearbeitung der gesamten Breite des Laufsitzes in einem Arbeitsgang. Die Vorbearbeitung und die Schleifzwischenbearbeitung der Lagersitze können zu einem Arbeitsschritt zusammengefaßt und damit eine erhebliche Rationalisierung erreicht werden.

Bei einer bevorzugten Ausgestaltung der Erfindung wird die Drehrichtung des Werkstücks zwischen der Vorbearbeitung (Schruppen) und der Feinbearbeitung (Schlichten) umgekehrt, wobei die Drehrichtung beim Schruppen vorzugsweise gegen die Umfangsschneiden und beim Schlichten gegen die Stirnschneiden des Drehfräswerkzeugs gerichtet. Der Hauptspan wird daher beim Schruppen mit der Umfangsschneide und beim Schlichten mit der Stirnschneide abgenommen. Die nicht durch die Vorbearbeitung abgenutzten Stirnschneiden können somit beim Schlichten die notwendige Qualität des Laufsitzes erzeugen. Durch diese technisch sinnvolle Aufgabenzuordnung können die einzelnen Schneiden des Drehfräswerkzeugs für die jeweiligen Aufgaben optimiert und damit die Werkzeugkosten verringert werden.

Um die bei Kurbelwellenlaufsitzen geforderte Balligkeit der Lagersitze zu erreichen, ist bei einer Weiterbildung der Erfindung vorgesehen, daß die Drehachse des Drehfräswerkzeugs geschwenkt wird.

In Weiterbildung der Erfindung wird die Vorschubgeschwindigkeit des Drehfräswerkzeugs während eines Arbeitszyklus in Abhängigkeit von dem Eingriffsbereich am zu schleifenden Lagersitz gesteuert. Vorzugsweise wird hierbei die Vorschubgeschwindigkeit des Fräswerkzeugs im mittleren Zyklusabschnitt etwas verlangsamt, um sicherzustellen, daß die Stirnschneiden des Drehfräswerkzeugs die gesamte Laufsitzbreite kontinuierlich erfassen, so daß die gewünschte zylindrische Endform erzeugt wird.

Je nach Gestaltung der Lagersitze gewähren diese auch eine gewisse axiale Führung für das Pleuel- oder Hauptlager. Dies erfolgt über den an den Lagersitz angrenzenden Abschnitte der Planschultern der Kurbelwangen. Es liegt daher im Rahmen der Erfindung, daß mittels des Fräswerkzeugs auch die beidseits des Lagersitzes angeordneten Planschultern wenigstens im an die Lagersitze angrenzenden Bereich bearbeitet werden, wobei vorzugsweise die Bearbeitung der Planschultern, des Übergangsradius und des Lagersitzes in einem Arbeitsgang erfolgt.

Ferner sind bei manchen Lagersitzen Eckeinstiche am Übergang des Laufsitzes zu den Planschultern vorgesehen. Diese lassen sich erfindungsgemäß dadurch erzeugen, daß das Fräswerkzeug derart ausgerichtet wird, daß eine Schneidplatte der Position eines vorgegebenen Eckeinstichs am Übergang von Lagersitz zu Planschulter zugeordnet wird, und daß das stillgesetzte Fräswerkzeug bei sich drehenden Werkstück radial zu dem Werkstück zugestellt wird. Der Einstich wird demnach im reinen Drehverfahren erzeugt, wobei die Schnittgeschwindigkeit durch die Drehung der Kurbelwelle bestimmt wird.

Eine erfindungsgemäße Vorrichtung besitzt die Merkmale nach Patentanspruch 9. Vorzugsweise sind an dem Fräswerkzeug mehrere, bspw. drei Schneidplatten vorgesehen die vorzugsweise als Wendeplatten ausgebildet sind, so daß sie an unterschiedliche Laufsitzgeometrien angepaßt oder ein Verschleiß berücksichtigt werden kann. Hierbei ist die Schneidplattengeometrie vorzugsweise der Geometrie des zu bearbeitenden Lagersitzes hinsichtlich Laufsitz, Übergangsradius, Planschulter etc. angepaßt.

Bei einer besonders bevorzugten Ausgestaltung entspricht die rechtwinklige Projektionsfläche der umlaufenden Werkzeugschneide der zu erzielenden Laufsitzgeometrie einschließlich Übergangsradius und Planschulter, so daß eine hochgenaue Fertigung des Lagersitzes in einem Arbeitsgang ermöglicht wird.

Erfindungsgemäß weisen die Schneidplatten im Schneidbereich einen Radius und daran anschließende, zueinander rechtwinklige Schneidsektionen auf, wobei bei einer Ausgestaltung der Erfindung wenigstens eine der Schneidplatten die Form eines in den Lagersitz einzubringenden Einstichs aufweist.

Zum Bearbeiten der auf einer Kreisbahn umlaufenden Hublagerzapfen ist erfindungsgemäß außerdem eine Vorschubeinrichtung zur Zustellung des Drehfräserwerkzeugs radial zu einem zu bearbeitenden Lagersitz des Werkstücks vorgesehen. Über eine Steuerung kann die tangentiale und radiale Zustellung gleichzeitig bahngesteuert erfolgen. Dadurch können auch die Hublager ohne Umspannen bearbeitet werden.

Zweckmäßigerweise weist die Vorrichtung auch eine Steuerung für die Vorschubgeschwindigkeit des Fräswerkzeugs in Abhängigkeit von dem Eingriffsbereich an dem zu schleifenden Lagersitz auf, um den unterschiedlichen Gegebenheiten während des Drehfräsvorgangs (Eintritt ins Vollmaterial, Zu - bzw. Abnehmen der Spandicke etc.) Rechnung zu tragen und zu gewährleisten, daß die Stirnschneide des Drehfräswerkzeugs kontinuierlich die gesamte Laufsitzbreite des Lagersitzes erfaßt.

Ferner ist erfindungsgemäß eine Einrichtung zum vorzugsweise horizontalen Schwenken der Drehachse des Fräswerkzeugs vorgesehen, um die geforderte Balligkeit des Laufsitzes zu erzeugen.

Als Trennstelle zwischen Drehfräswerkzeug und Antriebsspindel ist erfindungsgemäß zur zuverlässigen Übertragung des Drehmoments eine Verzahnung, insbesondere eine Hirth-Verzahnung vorgesehen. Außerdem ist vorgesehen, daß das Fräswerkzeug mit Hilfe einer Spannzange festklemmbar ist, um einen automatischen Werkzeugwechsel zu ermöglichen. Da der Abstand der Kurbelwangen bei Automobil-Kurbelwellen verhältnismäßig gering ist, steht nur ein schmaler Einstich für das Drehfräswerkzeug zur Verfügung. Angesichts der Hubhöhe der Kurbelwelle muß das Drehfräswerkzeug demnach sehr langgestreckt sein, um die Bearbeitung des Lagersitzes vornehmen zu können. Eine solch langgestreckte Gestaltung wird durch die Hirth-Verzahnung ermöglicht, wobei das Drehfräswerkzeug über eine Spannzange festklemmbar ist. Das über die Hirth-Verzahnung angekoppelte Drehfräswerkzeug kann über die Spannzange an einer Verlängerung der Arbeitsspindel festgezogen werden, ohne daß es erforderlich ist, das Drehfräswerkzeug von außen zu umgreifen, wie dies bei herkömmlichen Schnittstellen üblicherweise der Fall ist. Da die Schnittstelle zwischen Drehfräswerkzeug und Arbeitsspindel sehr nahe an der Schneidstelle liegt, wird gleichzeitig eine weit vorgeschobene Lagerung für das Werkzeug erreicht, die die Bearbeitungsgüte weiter verbessert.

Es liegt ferner im Rahmen der Erfindung, daß mehrere Arbeitsspindeln nebeneinander angeordnet sind, um gleichzeitig mehrere Lagersitze bearbeiten zu können.

Weiterbildungen, Vorteile und Anwendungsmöglichkeiten der Erfindung ergeben sich auch aus der nachfolgenden Beschreibung eines Ausführungsbeispiels und der Zeichnung.

Es zeigen:
- Fig. 1: einen Längsschnitt durch ein dem Lagersitz einer Kurbelwelle zugeordnetes Drehfräswerkzeug,
- Fig. 2: eine schematische perspektivische Ansicht einer erfindungsgemäßen Drehfräsmaschine,
- Fig. 3A bis 3F: schematisch die Bearbeitungsschritte bei der Bearbeitung des Radiallagers,
- Fig. 4A bis 4H: schematisch die Bearbeitungsschritte bei der Bearbeitung des Axiallagers und
- Fig. 5A bis 5C: schematische Darstellungen verschiedener zu bearbeitender Lagersitze.

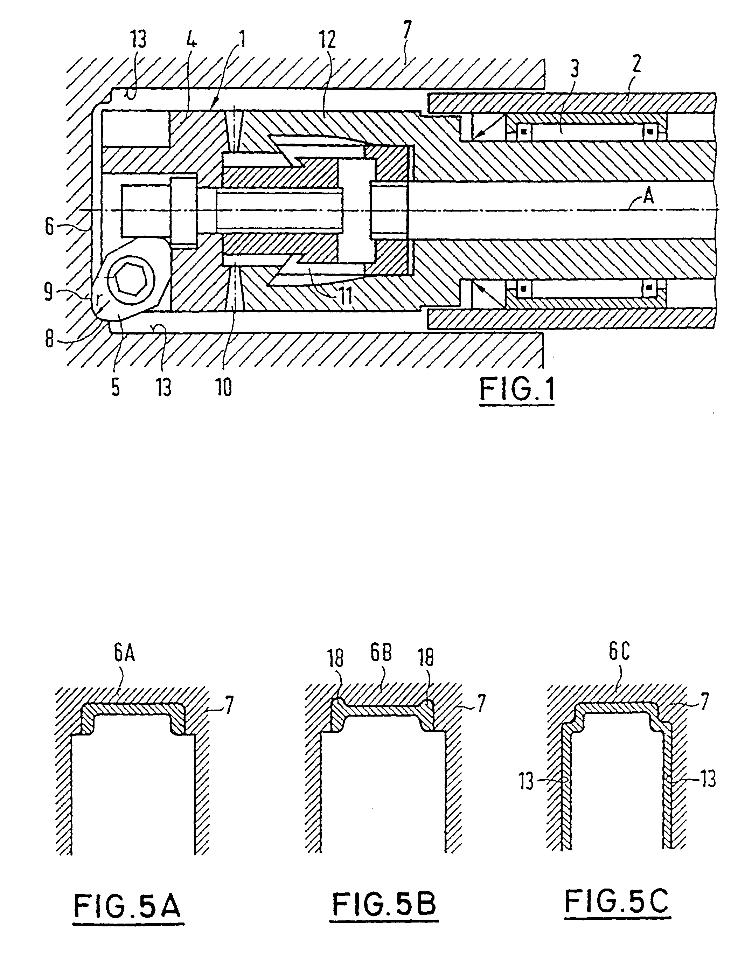

Das in Fig. 1 gezeigte Drehfräswerkzeug 1 ist in einer nur angedeuteten Arbeitsspindel 2 über Lager 3 , insbesondere Nadellager, drehbar gelagert und über einen nicht dargestellten Antrieb um seine Achse A mit hoher Geschwindigkeit, bspw. mit Drehzahlen von bis 30000 min⁻¹ rotierbar.

An einem Werkzeugkopf 4 des Drehfräswerkzeugs 1 sind bspw. drei Schneidplatten 5 aus Hartmetall, Cermet, CBN oder dgl. gleichmäßig über den Umfang verteilt, angeordnet. Die Schneidplattengeometrie ist der Geometrie eines Lagersitzes 6 einer zu bearbeitenden Kurbelwelle 7 oder dergleichen Werkstück derart angepaßt, daß mit dem Drehfräswerkzeug 1 in einem Arbeitsgang die gesamte Breite des Lagersitzes 6 bearbeitet werden kann. Die rechtwinklige Projektionsfläche der umlaufenden Werkzeugschneiden entspricht der zu erzielenden Laufsitzgeometrie. Hierzu weisen die Schneidplatten 5 einen Eckradius r und hieran angrenzende, im wesentlichen rechtwinklig zueinander angeordnete Schneidsektionen, nämlich eine Umfangsschneide 8 und eine Stirnschneide 9 auf. Die Schneidplatten 5 sind als Wendeplatten ausgebildet, so daß sie bei einem Verschleiß der Umfangsschneide 8 bzw. der Stirnschneide 9 einfach gedreht und weiterverwendet werden können.

Der Werkzeugkopf 4 ist über eine Hirth-Verzahnung 10 mit der Arbeitsspindel 2 gekoppelt, und wird über eine Spannzange 11 festgeklemmt, so daß ein automatischer Werkzeugwechsel möglich ist. Hierbei kann zwischen Arbeitsspindel 2 und Werkzeugkopf 4 noch eine Verlängerung 12 vorgesehen sein, um dem Werkzeugkopf 4 einen Eintritt in den schmalen Bereich zwischen den eine Axiallagerung bewirkenden Planschultern 13 der Kurbelwangen der Kurbelwelle 7 zu ermöglichen. Durch die weit vorgeschobene Ankopplung des Drehfräswerkzeugs 1 an die Arbeitsspindel 2 wird eine Lagerung sehr nahe an der Bearbeitungsstelle erreicht.

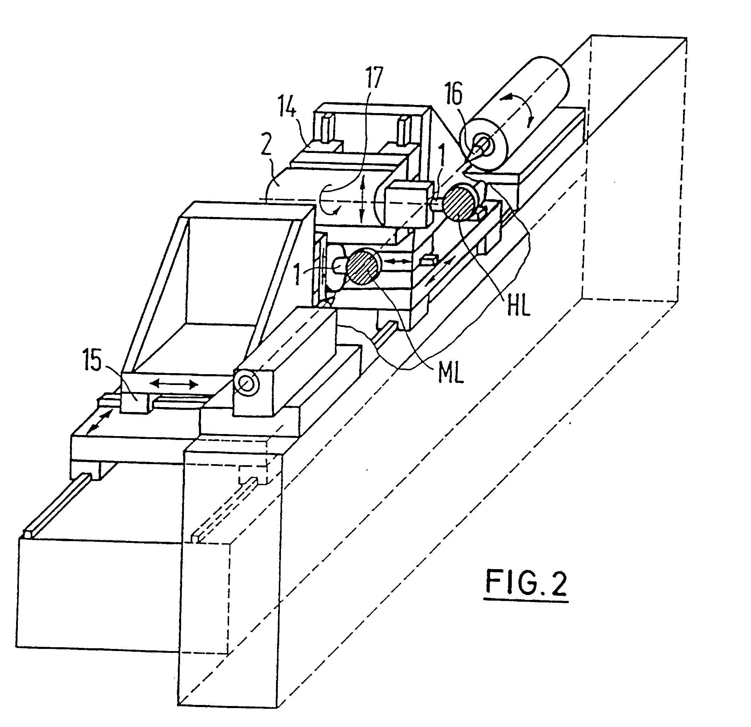

Wie sich aus der schematischen Darstellung von Fig. 2 ergibt, bei der das Werkstück nur andeutungsweise in Form zweier zu bearbeitender Lagersitze 6 dargestellt ist, können mehrere Arbeitsspindeln 2 nebeneinander angeordnet sein, um die gleichzeitige Bearbeitung mehrerer Lagersitze 6 von Mittellagern ML und/oder Hublagern HL einer Kurbelwelle 7 zu ermöglichen. Die Arbeitsspindeln 2 sind über eine Vorschubeinrichtung 14 vertikal beweglich. Ferner ist eine radiale Vorschubeinrichtung 15 vorgesehen, die gemeinsam mit der vertikalen Vorschubeinrichtung 14 die Bewegung der Arbeitsspindel 2 mit dem Drehfräswerkzeug 1 zur Bearbeitung von Hublagern auch bei zentrisch eingespannter Kurbelwelle 7 ermöglicht. Über eine nicht näher dargestellte Steuerung wird die Vorschubgeschwindigkeit der Zustelleinrichtung 14 beim Bearbeiten der Mittellager ML und zusätzlich der radialen Vorschubeinrichtung 15 beim Bearbeiten der Hublager HL in Abhängigkeit von dem Eingriffsbereich am zu bearbeitenden Lagersitz 6 gesteuert.

Zum Bearbeiten der Lagersitze 6 einer Kurbelwelle 7 wird die Kurbelwelle 7 in einer Aufnahmeeinrichtung 16 eingespannt und um ihre Längsachse gedreht. Gleichzeitig wird das in der Arbeitsspindel 2 rotierende Drehfräswerkzeug 1, das in der gewünschten Position relativ zu dem Lagersitz 6 der zu bearbeiten Kurbelwelle 7 angeordnet ist, über die Vorschubeinrichtung 14 tangential zu dem zu bearbeiten Lagersitz 6 zugestellt. Um den unterschiedlichen Beanspruchungen des Schneidwerkzeugs und den zu erzielenden Qualitäten des Bearbeitungsvorgangs Rechnung zu tragen, wird die tangentiale Vorschubgeschwindigkeit so gesteuert, daß während der Vorbearbeitungsphase (Schruppen) die Umfangsschneiden 8 des Fräswerkzeugs 1 optimale Schnittbedingungen haben und während des Fertigungsbearbeiten (Schlichten) des Laufsitzes 6 die Stirnschneiden 9 den ganzen Laufsitz 6 erfassen können.

Die Drehrichtung der Kurbelwelle 7 ist hierbei zunächst gegen die Umfangsschneiden 8 des Drehfräswerkzeugs 1 gerichtet, welche die Schruppbearbeitung vornehmen. Anschließend kann die Drehrichtung der Kurbelwelle 6 umgekehrt und gegen die Stirnschneiden 9 des Drehfräswerkzeugs 1 gerichtet werden, die die Schlichtbearbeitung vornehmen und die Endqualität des Lagersitzes 6 erzeugen.

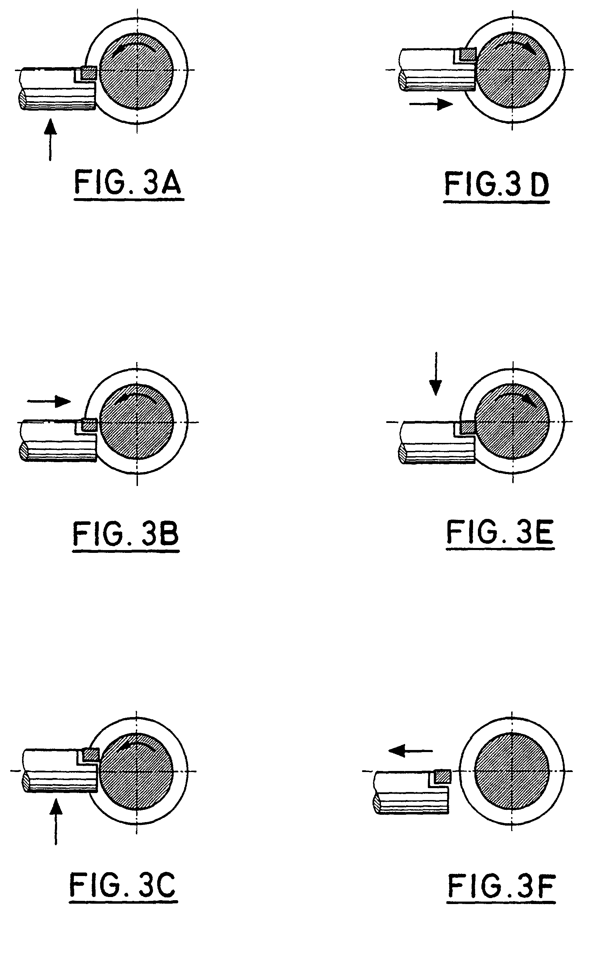

Beispielhafte Bearbeitungsstrategien für die Bearbeitung des Radiallagers mit niedriger Schulter ergeben sich aus den Fig. 3A bis 3F, wobei von einem Lagersitzdurchmesser von ca. 58 mm und einem Werkzeugdurchmesser von ca. 26 mm ausgegangen wird. Bei der nachfolgend beschriebenen Bearbeitung handelt es sich um eine Versuchsreihe, die bei niedrigeren Werkstückdrehzahlen durchgeführt wurde, als sie im Automobilbau üblich sind. Bei den erfindungsgemäß höheren Drehzahlen (20 - 100 1/min) werden jedoch ähnliche Bedingungen vorgesehen.

Zum Anstellen des Werkzeuges 1 (vgl. Fig. 3A) wird die Werkzeugsachse A ca. 10 mm unterhalb der Werkstückachse positioniert. Danach erfolgt eine Anstellbewegung des Werkzeugs 1 bis auf 0,1 mm vor den Enddurchmesser.

Zur Bearbeitung der Schulter 13 und Vorbearbeitung der Lauffläche 6 (vgl. Fig. 3A) bewegt sich die Werkzeugachse A in einer Tangentialbahn um 10 mm in Y-Richtung auf die Werkstückachse zu. Währenddessen dreht das Werkstück 7 drei volle Umdrehungen (1080°). Die Vorschubgeschwindigkeit der Rundachse beträgt dabei 20 1/min, die Vorschubbewegung der Z-Achse etwa v_{f} = 80 mm/min.

Für die Schlichtbearbeitung wird nun über eine viertel Umdrehung um das Schlichtaufmaß (aₚ = 0,1 mm) zugestellt. Weiterhin wird die Drehrichtung des Werkstückes 7 geändert, um die Innenseite der Stirnschneiden 9 in den Eingriff zu bringen und diese für die Schlichtbearbeitung zu nutzen (vgl. Fig. 3D). Die Schlichtbearbeitung wird mit 0,1 mm Aufmaß durchgeführt. Beim Schlichten bewegt sich die Werkzeugachse A um 10 mm in Y-Richtung nach unten, während die Werkstückspindel sieben Umdrehungen in zur Vorbearbeitung umgekehrter Richtung dreht. Dies bewirkt, daß die Schlichtbearbeitung von der Innenseite der Stirnschneide 9 durchgeführt wird. Bei jeder Umdrehung werden unterschiedliche Bereiche im Schulterbereich 13 bzw. auf der Lauffläche 6 des Lagers bearbeitet (Fig. 3E). Die Bearbeitung ist abgeschlossen, wenn die Werkzeugachse A 13 mm unterhalb der Werkstückachse steht. Das Werkzeug 1 kann nun zurückgezogen werden (Fig. 3F).

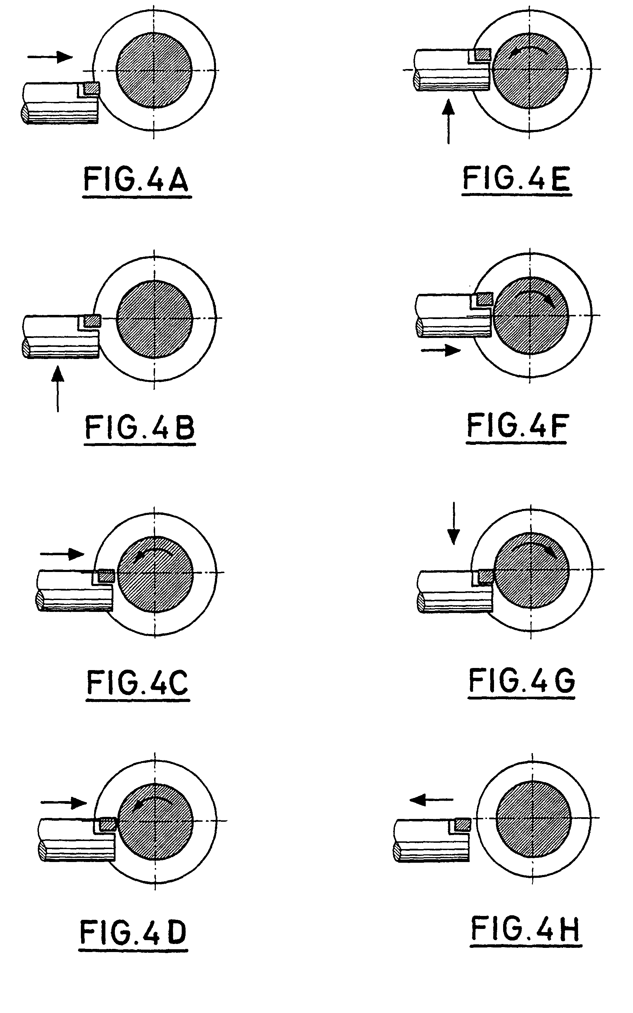

Zur Bearbeitung des Axiallagers wird die Werkzeugachse A zunächst 22 mm unterhalb der Werkstückachse positioniert. Danach erfolgt eine Anstellbewegung des Werkzeugs 1 bis auf 11,1 mm vor den Enddurchmesser. Diese Anstellbewegung erfolgt mit einer Vorschubgeschwindigkeit von v_{f} = 200 mm/min (Fig. 4A). Zur Zustellung im Schulterbereich bewegt sich die Werkzeugachse A in einer Tangentialbahn um 12 mm in Y-Richtung auf die Werkstückachse zu, ohne daß das Werkstück 7 dreht. Die Vorschubgeschwindigkeit beträgt dabei 100 1/min (Fig. 4B). Die Bearbeitung der Lagerschultern 13 erfolgt in einer Spiralbahn. Dabei bewegt sich das Werkzeug 1 während acht Werkstückumdrehungen um 10 mm in Z-Richtung auf die Lauffläche 6 zu. Das Werkzeug 1 bewegt sich dabei mit einer Vorschubgeschwindigkeit von 7 mm/min. Das Werkstück 7 dreht mit einer Drehfrequenz von 5,5 1/min (Fig. 4C). Zur Bearbeitung der Lauffläche 6 folgt eine radiale Zustellbewegung um aₚ = 1 mm über einer vollen Werkstückumdrehung. Die Vorschubgeschwindigkeit der Rundachse beträgt dabei 20 1/min, die Vorschubbewegung der Z-Achse beträgt dabei v_{f} = 80 mm/min (Fig. 4D). Um die Lagerfläche 6 und vor allem den Übergang zu den Lagerschultern 13 vollständig zu bearbeiten, wird das Werkzeug 1 in Y-Richtung bis auf Achsmitte des Werkstückes 7 verschoben. Dies geschieht interpoliert über fünf Werkstückumdrehungen. Die Vorschubgeschwindigkeit bleibt unverändert (Fig. 4E). Für die Schlichtbearbeitung wird nun über eine viertel Umdrehung um das Schlichtaufmaß (aₚ = 0,1 mm) zugestellt. Weiterhin wird die Drehrichtung des Werkstückes 7 geändert, um die Innenseite der Stirnschneiden 9 in den Eingriff zu bringen und diese für die Schlichtbearbeitung zu nutzen (Fig. 4F). Die Schlichtbearbeitung wird mit 0,1 mm Aufmaß durchgeführt. Beim Schlichten bewegt sich die Werkzeugachse A um 13 mm in Y-Richtung nach unten, während die Werkstückspindel sieben Umdrehungen in umgekehrter Richtung zur Vorbearbeitung dreht. Dies bewirkt, daß die Schlichtbearbeitung von der Innenseite der Stirnschneide 9 durchgeführt wird. Bei jeder Umdrehung werden unterschiedliche Bereiche im Schulterbereich 13 bzw. auf der Lauffläche 6 des Lagers 3 bearbeitet (Fig. 4G). Die Bearbeitung ist abgeschlossen, wenn die Werkzeugachse A 13 mm unterhalb der Werkstückachse steht. Das Werkzeug 1 kann nun zurückgezogen werden (Fig. 4H).

Es hat sich herausgestellt, daß insbesondere zur Bearbeitung von Gußkurbelwellen (Werkstoff GGG 60) eine Schnittgeschwindigkeit von 600-1200 m/min die besten Ergebnisse bringt. Bei einem Werkzeugdurchmesser von 26 mm ergab sich bei einer Werkzeugdrehfrequenz von 7000-15000 min⁻¹ ein Zahnvorschub von 0,06-0,08 mm.

Um die an Lagersitzen von Kurbelwellen häufig geforderte Balligkeit der Lagersitze zu erreichen, wird die Werkzeugachse A des Drehfräswerkzeugs 1 mit Hilfe einer Schwenkvorrichtung 17 horizontal geschwenkt. Dies ist jedoch nur in sehr geringem Maße erforderlich, da die Balligkeit üblicherweise lediglich 2 - 3 µm betragen soll.

In den Fig. 5A bis 5C sind verschiedene Lagersitzgestaltungen gezeigt, die üblicherweise bei der Bearbeitung der Lagersitze 6 von Kurbelwellen 7 auftreten. Hierbei ist das abzunehmende Material durch eine der Schraffur des Werkstücks 7 entgegengesetzte Schraffur gekennzeichnet.

Fig. 5A zeigt den einfachsten Fall eines Lagersitzes 6A, bei dem ohne weitere Besonderheiten der Lagersitz durch tangentialen Vorschub des Drehfräswerkzeugs 1, dessen Schneidplattengeometrie an die Lagersitzkontur angepaßt ist, hergestellt wird.

Bei der Gestaltung gemäß Fig. 5B sind neben dem zu bearbeitenden Lagersitz 6B noch zwei an die Planschultern 13 der Kurbelwangen angrenzende Einstiche 18 anzubringen. Diese können mit einem um seine Achse rotierenden Drehfräswerkzeug nicht ohne weiteres hergestellt werden. Daher ist vorgesehen, daß zur Herstellung des Einstichs 18 das Drehfräswerkzeug 1 stillgesetzt wird und eine an die Kontur des Einstichs 18 angepaßte Schneidplatte axial zu der sich drehenden Kurbelwelle 7 zugestellt wird. Demnach wird der Einstich 18 in einem reinen Drehverfahren erzeugt.

Fig. 5C zeigt eine Ausführungsform, bei der neben dem Lagersitz 6C auch die Planschultern 13 der Kurbelwangen mitbearbeitet werden müssen. Dies erfolgt auf gleiche Weise wie die Bearbeitung des Lagersitzes 6A, es müssen lediglich die Schneidplatten des Drehfräswerkzeugs 1 entsprechend angepaßt werden.

Mit der Erfindung werden somit ein Verfahren und eine Vorrichtung geschaffen, die durch Verwendung des Hochgeschwindigkeitsdrehfräsens kurze Zykluszeiten und eine sehr gute Qualität bei der Bearbeitung der Lagersitze von Kurbelwellen erreichbar machen, so daß auf den Bearbeitungsschritt des Schleifens ganz verzichtet werden kann. Aufgrund der hohen Schnittgeschwindigkeiten ergeben sich beim Fertigdrehfräsprozeß geringe Werkstückbeanspruchungen und damit eine gute Raumgeometrie. Es können einfache Werkzeuge eingesetzt werden, so daß auch die Werkzeugkosten äußerst niedrig sind.

### Bezugszeichenliste

- 1: Drehfräswerkzeug
- 2: Arbeitsspindel
- 3: Lager
- 4: Werkzeugkopf
- 5: Schneidplatten
- 6: Lagersitz
- 7: Kurbelwelle
- 8: Umfangs schneide
- 9: Stirnschneide
- 10: Hirth-Verzahnung
- 11: Spannzange
- 12: Verlängerung
- 13: Planschulter
- 14: vertikale Vorschubeinrichtung
- 15: radiale Vorschubeinrichtung
- 16: Aufnahmeeinrichtung
- 17: Schwenkvorrichtung
- 18: Einstiche

- A: Werkzeugachse
- r: Eckradius
- HL: Hublager
- ML: Mittellager

## Patentansprüche

1. Verfahren zum Bearbeiten der Lagersitze (6) von Automobilkurbelwellen (7) oder dgl. Werkstücken, wobei die Kurbelwelle (7) mittels einer Aufnahmeeinrichtung (16), in welcher die Kurbelwelle (7) drehbar antreibbar gelagert ist, mit ca. 20 bis 100 Umdrehungen/Minute gedreht wird, und wobei ein orthogonal zu der Kurbelwelle (7) angeordnetes Werkzeug (1) zu der Kurbelwelle (7) zugestellt wird, **dadurch gekennzeichnet,** daß ein Drehfräswerkzeug (1) tangential zu dem zu bearbeitenden Lagersitz (6) zugestellt und mit so hoher Drehzahl um seine Achse (A) rotiert wird, daß sich Schnittgeschwindigkeiten von 600 bis 1200 m/min ergeben und bei geringer Werkstückbeanspruchung eine einer Schleifbearbeitung entsprechende Oberflächengüte des Lagersitzes (6) erreicht wird, und daß die Drehrichtung der Kurbelwelle (7) beim Schruppen gegen die Umfangsschneiden (8) des Drehfräswerkzeugs (1) und beim Schlichten gegen die Stirnschneiden (9) des Drehfräswerkzeugs (1) gerichtet ist.

2. Verfahren nach Anspruch 1 ,**dadurch gekennzeichnet,** daß die Drehrichtung der Kurbelwelle (7) zwischen der Vorbearbeitung (Schruppen) und der Feinbearbeitung (Schlichten) umgekehrt wird.

3. Verfahren nach einem der Ansprüche 1 oder 2, **dadurch gekennzeichnet,** daß die Drehachse (A) des Drehfräswerkzeugs (1) geschwenkt wird.

4. Verfahren nach einem der Ansprüche 1 bis 3, **dadurch gekennzeichnet,** daß die Vorschubgeschwindigkeit des Drehfräswerkzeugs (1) während eines Arbeitszyklus in Abhängigkeit von dem Eingriffsbereich an dem zu schleifenden Lagersitz (6) gesteuert wird.

5. Verfahren nach Anspruch 4, **dadurch gekennzeichnet,** daß die Vorschubgeschwindigkeit des Drehfräswerkzeugs (1) im mittleren Zyklusabschnitt etwas verlangsamt wird.

6. Verfahren nach einem der Ansprüche 1 bis 5, **dadurch gekennzeichnet,** daß mittels des Drehfräswerkzeugs (1) auch die beidseits des Lagersitzes (6) angeordneten Planschultern (13) des Werkstücks (7) wenigstens im an die Lagersitze (6) angrenzenden Abschnitt bearbeitet werden.

7. Verfahren nach Anspruch 6, **dadurch gekennzeichnet,** daß die beiderseits des Lagersitzes (6) angeordneten Planschultern (13) und die Übergangsradien zum Lagersitz (6) in einem Arbeitsgang mit dem Lagersitz (6) bearbeitet werden.

8. Verfahren nach einem der Ansprüche 1 bis 7, **dadurch gekennzeichnet,** daß das Drehfräswerkzeug (1) derart ausgerichtet wird, daß eine Schneidplatte (5) der Position eines vorgesehenen Eckeinstichs (18) am Übergang von Lagersitz (6) zu Planschuler (13) zugeordnet wird, und daß das stillgesetzte Drehfräswerkzeug (1) bei sich drehendem Werkstück (7) radial zu dem Werkstück (7) zugestellt wird.

9. Vorrichtung zur Durchführung des Verfahrens nach einem der Ansprüche 1 bis 9 mit einer Aufnahmeeinrichtung (16) zum Drehen einer Automobil-Kurbelwelle (7) oder dgl. Werkstück mit ca. 20 bis 100 Umdrehungen/Minute, durch eine orthogonal zur Werkstückachse angeordnete Arbeitsspindel (2), in welcher ein Drehfräswerkzeug (1) um seine Achse (A) rotierbar antreibbar gelagert und mit so hoher Drehzahl drehbar ist, daß Schnittgeschwindigkeiten von 600 bis 1200 m/min erreicht werden, und mit einer Vorschubeinrichtung (14) zur Zustellung des Drehfräswerkzeugs (1) tangential zu einem zu bearbeitenden Lagersitz (6) der Kurbelwelle (7) und mit einer Hirth-Verzahnung (10) als Schnittstelle zwischen dem Drehfräswerkzeug (1) und der Arbeitsspindel (2).

10. Vorrichtung nach Anspruch 9, **dadurch gekennzeichnet,** daß an dem Drehfräswerkzeug (1) mehrere, insbesondere drei Schneidplatten (5) vorgesehen sind, und daß die Schneidplattengeometrie der Geometrie des zu bearbeitenden Lagersitzes (6) hinsichtlich Laufsitz, Übergangsradius und Planschulter angepaßt ist.

11. Vorrichtung nach Anspruch 10, **dadurch gekennzeichnet,** daß die rechtwinklige Projektionsfläche der umlaufenden Werkzeugschneiden des Drehfräswerkzeugs (1) der zu erzielenden Laufsitzgeometrie entspricht.

12. Vorrichtung nach Anspruch 10 oder 11, **dadurch gekennzeichnet,** daß die Schneidplatten (5) im Schneidbereich einen Radius (r) und daran anschließende, zueinander rechtwinklige Schneidsektionen (8, 9) aufweisen.

13. Vorrichtung nach einem der Ansprüche 10 bis 12, **dadurch gekennzeichnet,** daß die Schneidplatten (5) als Wendeplatten ausgebildet sind.

14. Vorrichtung nach einem der Ansprüche 10 bis 13, **dadurch gekennzeichnet,** daß wenigstens eine der Schneidplatten (5) die Form eines in den Lagersitz (6) einzubringenden Einstichs (18) aufweist.

15. Vorrichtung nach einem der Ansprüche 9 bis 14, **gekennzeichnet durch** eine Schwenkvorrichtung (17) zum Schwenken der Drehachse (A) des Drehfräswerkzeugs (1).

16. Vorrichtung nach einem der Ansprüche 9 bis 15, **dadurch gekennzeichnet,** daß das Drehfräswerkzeug (1) mit Hilfe einer Spannzange (11) festklemmbar ist.

17. Vorrichtung nach einem der Ansprüche 9 bis 16, **gekennzeichnet durch** eine radiale Vorschubeinrichtung (15) zur hinund herpendelnden Bewegung der Arbeitsspindeln (2).

18. Vorrichtung nach einem der Ansprüche 9 bis 17, **gekennzeichnet durch** eine Steuerung der Vorschubgeschwindigkeit des Drehfräswerkzeugs (1) in Abhängigkeit von dem Eingriffsbereich an dem zu schleifenden Lagersitz (6).

19. Vorrichtung nach einem der Ansprüche 9 bis 18, **dadurch gekennzeichnet**, daß zur gleichzeitigen Bearbeitung mehrerer Lagersitze (6) mehrere Arbeitsspindeln (2) nebeneinander angeordnet sind.

## Claims

1. A process for machining the bearing seats (6) of automotive crank shafts (7) or similar workpieces, wherein the crank shaft (7) is rotated at approximately 20 to 100 revolutions per minute by a receiving means (16) in which the crank shaft (7) is mounted to be rotatably drivable, and in which a tool (1) arranged perpendicular to the crank shaft (7) is infed with respect to the crank shaft (7), **characterized in** that a rotary milling tool (1) is infed tangentially with respect to the bearing seat (6) and rotated with such high speed about its axis (A) that cutting speeds of 600 to 1200 m/min are achieved and a surface quality of the bearing seat (6) corresponding to a grinding machining is achieved with low workpiece stress, and in that the direction of rotation of the crank shaft (7) during rough-machining is directed towards the peripheral cutters (8) of the rotary milling tool (1) and during finish-cutting is directed towards the end-face cutters (9) of the rotary milling tool (1).

2. A process according to claim 1, **characterized in** that the direction of rotation of the crank shaft (7) is reversed between the pre-machining (rough-machining) and the fine-machining (finish-cutting).

3. A process according to one of claims 1 or 2, **characterized in** that the access of rotation (A) of the rotary milling tool (1) is pivoted.

4. A process according to one of claims 1 to 3, **characterized in** that the feedrate of the rotary milling tool (1) during a work cycle is controlled in dependence on the area of engagement on the bearing seat (6) to be ground.

5. A process according to claim 4, **characterized in** that the feedrate of the rotary milling tool (1) is slowed somewhat in the middle part of the cycle.

6. A process according to one of claims 1 to 5, **characterized in** that the plane shoulders (13) of the workpiece (7) which are arranged on either side of the bearing seat (6) are also machined by the rotary milling tool (1), at least in the portion adjoining the bearing seats (6).

7. A process according to claim 6, **characterized in** that the plane shoulders (13) which are arranged on either side of the bearing seat (6) and the transition radii of the bearing seat (6) are machined in one operation with the bearing seat (6).

8. A process according to one of claims 1 to 7, **characterized in** that the rotary milling tool (1) is aligned such that a cutting plate (5) is associated with the position of a provided corner recess (18) at the transition from the bearing seat (6) to the plane shoulder (13), and in that the stopped rotary milling tool (1) is infed radially with respect to the workpiece (7) as the workpiece (7) rotates.

9. A device for carrying out the process according to one of claims 1 to 8, comprising a receiving means (16) for rotating an automotive crank shaft (7) or similar workpiece at approximately 20 to 100 revolutions per minute, a workspindle (2) which is arranged perpendicular to the workpiece axis and in which a rotary milling tool (1) is mounted to be rotatably drivable about its axis (A) and is rotatable at such high speed that cutting speeds of 600 to 1200 m/min are achieved, and comprising a feed means (14) for infeeding the rotary milling tool (1) tangentially with respect to a bearing seat (6) of the crank shaft (7) which is to be machined, and comprising a Hirth coupling (10) forming the interface between the rotary milling tool (1) and the workspindle (2).

10. Device according to claim 9, **characterized in** that a plurality, in particular three, cutting plates (5) are provided on the rotary milling tool (1), and in that the cutting plate geometry is matched to the geometry of the bearing seat (6) to be machined as regards the bearing seat, the transition radius and the plane shoulder.

11. Device according to claim 10, **characterized in** that the right-angled projection surface of the revolving tool cutters of the rotary milling tool (1) corresponds to the bearing seat geometry to be achieved.

12. Device according to claim 10 or 11, **characterized in** that the cutting plates (5) have in the cutting region a radius (r) and, adjoining the latter, cutting sections (8, 9) which are at right angles to one another.

13. Device according to one of claims 10 to 12, **characterized in** that the cutting plates (5) are constructed as turnover plates.

14. Device according to one of claims 10 to 13, **characterized in** that at least one of the cutting plates (5) has the shape of a recess (18) to be made in the bearing seat (6).

15. Device according to one of claims 10 to 14, **characterized by** a pivoting device (17) for pivoting the axis of rotation (A) of the rotary milling tool (1).

16. Device according to one of claims 10 to 15, **characterized in** that the rotary milling tool (1) is fixedly clampable with the aid of a chuck (11).

17. Device according to one of claims 10 to 16, **characterized by** a radial feed means (15) for moving the workspindles (2) back and forth.

18. Device according to one of claims 10 to 17, **characterized by** a control of the feedrate of the rotary milling tool (1) in dependence on the area of engagement on the bearing seat (6) to be ground.

19. Device according to one of claims 10 to 18, **characterized in** that a plurality of workspindles (2) is arranged next to one another for the purpose of machining a plurality of bearing seats (6) at the same time.

## Revendications

1. Procédé pour l'usinage des logements de palier (6) de vilebrequins pour automobile (7) ou de pièces à usiner similaires, selon lequel le vilebrequin (7) est tourné à environ 20 à 100 tours / minute au moyen d'un dispositif récepteur (16) dans lequel le vilebrequin (7) est tourillonné de façon à pouvoir être entraîné et selon lequel un outil (1) disposé orthogonalement au vilebrequin (7) est déplacé vers le vilebrequin (7), **caractérisé en ce qu**'un outil pour fraisage par rotation (1) est déplacé tangentiellement vers le logement de palier (6) à usiner et qu'il est mis en rotation autour de son axe (A) à une vitesse angulaire si élevée que des vitesses de coupe de 600 à 1 200 m / min sont atteintes et qu'une finition de surface du logement de palier (6) correspondant à un usinage à abrasif est atteinte avec une faible fatigue de la pièce à usiner et en ce que le sens de rotation du vilebrequin (7) est dirigé lors du dégrossissement contre les arrêtes de coupe périphériques (8) de l'outil de fraisage par rotation (1) et lors de la finition contre les arrêtes de coupe frontales (9) de l'outil de fraisage par rotation (1).

2. Procédé selon la revendication 1, **caractérisé en ce que** le sens de rotation du vilebrequin (7) est inversé entre la préparation (dégrossissage) et la finition.

3. Procédé selon l'une des revendications 1 ou 2, **caractérisé en ce que** l'axe de rotation (A) de l'outil de fraisage par rotation (1) est incliné.

4. Procédé selon l'une des revendications 1 à 3, **caractérisé en ce que** la vitesse d'avance de l'outil de fraisage par rotation (1) lors d'un cycle d'usinage est commandée en fonction du domaine d'intervention sur le logement de palier (6) à usiner.

5. Procédé selon la revendication 4, **caractérisé en ce que** la vitesse d'avance de l'outil de fraisage par rotation (1) est légèrement ralentie vers le milieu du cycle.

6. Procédé selon l'une des revendications 1 à 5, **caractérisé en ce que** les épaulements plans (13) de la pièce à usiner (7) situés de part et d'autre du logement du palier (6) sont également usinés au moyen de l'outil de fraisage par rotation (1), au moins sur le segment contigu au logement du palier (6).

7. Procédé selon la revendication 6, **caractérisé en ce que** les épaulements plans (13) situés de part et d'autre du logement du palier (6) et les rayons de transition vers le logement de palier (6) sont usinés en une seule étape avec le logement du palier (6).

8. Procédé selon l'une des revendications 1 à 7, **caractérisé en ce que** l'outil de fraisage par rotation (1) est orienté de telle sorte qu'une plaquette coupante (5) corresponde à la position d'une rainure d'angle (18) prévue à la transition entre le logement de palier (6) et l'épaulement plan (13) et en ce que l'outil de fraisage par rotation (1) arrêté est déplacé de façon radiale vers la pièce à usiner (7) qui est en rotation.

9. Dispositif pour la mise en oeuvre du procédé selon l'une des revendications 1 à 8, avec un dispositif récepteur (16) pour tourner à environ 20 à 100 tours / minute un vilebrequin d'automobile (7) ou une pièce à usiner similaire, avec une broche porte-outil (2) positionnée orthogonalement à l'axe de la pièce à usiner et dans laquelle un outil pour fraisage par rotation (1) est tourillonné autour de son axe (A) de façon à pouvoir être entraîné et qui peut être mis en rotation à une vitesse angulaire si élevée que des vitesses de coupe de 600 à 1 200 m / min sont atteintes et avec un dispositif d'avance (14) pour faire avancer l'outil de fraisage par rotation (1) tangentiellement à un logement de palier (6) à usiner du vilebrequin (7), et avec une denture Hirth (10) comme jonction entre l'outil de fraisage par rotation (1) et la broche porte-outil (2).

10. Dispositif selon la revendication 9, **caractérisé en ce que** plusieurs plaquettes coupantes (5), notamment trois, sont prévues sur l'outil de fraisage par rotation (1) et en ce que la géométrie des plaquettes coupantes est ajustée à la géométrie du logement de palier (6) à usiner du point de vue du palier mobile, du rayon de transition et des épaulements plans.

11. Dispositif selon la revendication 10, **caractérisé en ce que** la surface de projection rectangle des arrêtes de coupe périphériques de l'outil de fraisage par rotation (1) correspond à la géométrie du palier mobile à atteindre.

12. Dispositif selon la revendication 10 ou 11, **caractérisé en ce que** les plaquettes coupantes (5) ont, dans le domaine de coupe, un rayon (r) auquel succèdent des sections coupantes (8, 9) perpendiculaires l'une par rapport à l'autre.

13. Dispositif selon l'une des revendications 10 à 12 **caractérisé en ce que les** plaquettes coupantes (5) sont des plaquettes coupantes réversibles.

14. Dispositif selon l'une des revendications 10 à 13, **caractérisé en ce que** une des plaquettes coupantes (5) au moins présente la forme d'une rainure (18) à réaliser dans le logement de palier (6).

15. Dispositif selon l'une des revendications 9 à 14, **caractérisé par** un dispositif de pivotement (17) pour pivoter l'axe de rotation (A) de l'outil de fraisage par rotation (1).

16. Dispositif selon l'une des revendications 9 à 15, **caractérisé en ce que** l'outil de fraisage par rotation (1) peut être bloqué à l'aide d'une pince de serrage (11).

17. Dispositif selon l'une des revendications 9 à 16, **caractérisé par** un dispositif d'avancement (15) radial pour déplacer dans un mouvement de va et vient la broche porte-outil (2).

18. Dispositif selon l'une des revendications 9 à 17, **caractérisé par** une commande de la vitesse d'avance de l'outil de fraisage par rotation (1) en fonction du domaine d'intervention sur le logement de palier (6) à usiner.

19. Dispositif selon l'une des revendications 9 à 18, **caractérisé en ce que** plusieurs broches porte-outil (2) sont placées les unes à côté des autres pour permettre l'usinage concomitant de plusieurs logements de palier (6).
